Europäisches Patentamt

European Patent Office

Office européen des brevets

(19)

(11) Publication number: **0 432 733 A2**

# (12) EUROPEAN PATENT APPLICATION

(21) Application number: 90123822.0

(22) Date of filing: **11.12.90**

(51) Int. Cl.5 **G11B 5/60, G11B 21 21**

(30) Priority: **11.12.89 JP 320820/89**

(43) Date of publication of application:
**19.06.91 Bulletin 91/25**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Bunichiro, Fujii**
**c/o SONY CORPORATION, 7-35,**
**Kitashinagawa 6-chome**
**Shinagawa-ku, Tokyo(JP)**
Inventor: **Kanzo, Okada**
**c/o SONY CORPORATION, 7-35,**

Kitashinagawa 6-chome
Shinagawa-ku, Tokyo(JP)
Inventor: **Kazushige, Kawazoe**
**c/o SONY CORPORATION, 7-35,**
Kitashinagawa 6-chome
Shinagawa-ku, Tokyo(JP)
Inventor: **Ichiro, Saito**
**c/o SONY CORPORATION, 7-35,**
Kitashinagawa 6-chome
Shinagawa-ku, Tokyo(JP)

(74) Representative: **Schmidt-Evers, Jürgen,**
**Dipl.-Ing. et al**
**Patentanwälte Mitscherlich, Gunschmann**
**Dr. Körber, Schmidt-Evers, Melzer, Dr. Schulz**
**Steinsdorfstrasse 10**
**W-8000 München 22(DE)**

(54) **Flying head slider assembly.**

(57) A flying head slider for supporting a magnetic transducer includes a pair of coplanar side rails (22, 23) to define a recessed section (24) therebetween. The recessed section (24) is open both at leading and trailing ends of the slider (21) . Each of the side rails (22, 23) has a tapered section (22a, 23a) at the leading end for receiving an air flow caused by a moving recording medium (5) to introduce the air flow under the corresponding side rail (22, 23). The side rails (22, 23) have such shapes as to provide a longer path (L1) for the air flow under one (22) of the side rails than an air flow path (L2) under the other (23) of the side rails when a direction of the air flow makes a skew angle $\theta s$ relative to a center line (C) of the slider (21 ). The longer path (L1) extends from the corresponding tapered section (22a) at its upstream end to the recessed section (24) at its downstream end, while the air flow path (L2) under the other (23) of the side rails extends from the corresponding tapered section (23a) at its upstream end to outside of the slider (21) at its downstream end. The flying head slider (21) provides balanced positive pressures under the side rails (22, 23) to effectively prevent the rolling or inclination of the slider (21).

FIG.7

## FLYING HEAD SLIDER ASSEMBLY

BACKGROUND OF THE INVENTION

Field of the Invention

The present invention relates generally to a flying head slider assembly, and more specifically to a flying head slider having an air bearing surface which provides an improved posture of the flying head slider relative to a moving recording medium surface with a close spacing therebetween.

Description of the Background Art

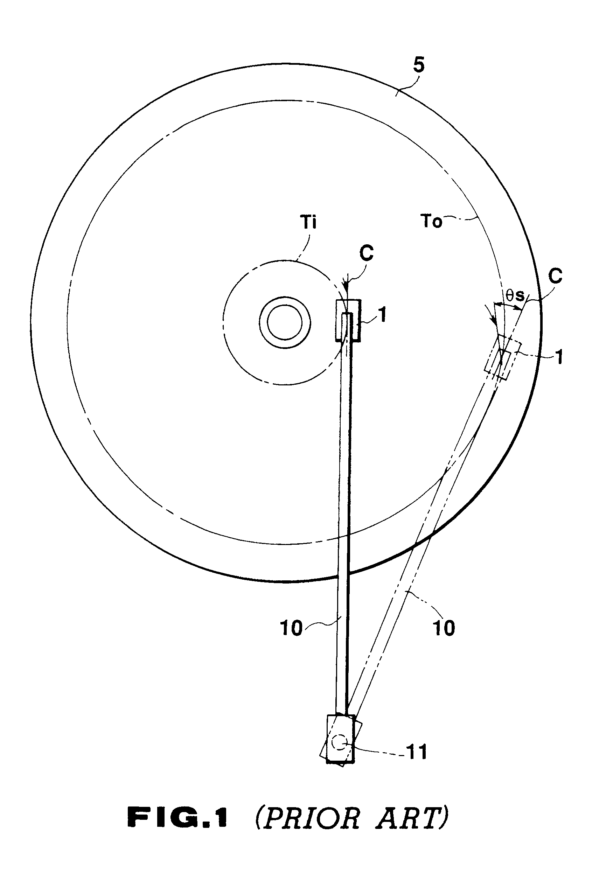

There are two types of actuators used in hard disk drive units for moving a magnetic head relative to a magnetic recording disk, that is, a linear type actuator and a rotary type actuator. Fig. 1 shows the rotary type actuator of the background art.

In Fig. 1, a support arm 10 is formed by a plate spring and is pivotably supported by a rotary shaft 11 at its base end. A flying head slider 1 is mounted on a tip end of the support arm 10 so as to be pivotable universally relative to the support arm 10. The pivotal movement of the support arm 10 is controlled by a drive motor (not shown) which controls the rotation of the rotary shaft 11. The pivotal movement of the support arm 10 causes the flying head slider 1 to move in a radial direction of a magnetic disk 5 between an innermost recording track Ti and an outermost recording track To. The flying head slider 1 is arranged such that its center line C coincides with a tangential line of the innermost track Ti indicative of a rotational direction of the magnetic disk 5 when the flying head slider 1 is positioned for the innermost track Ti.

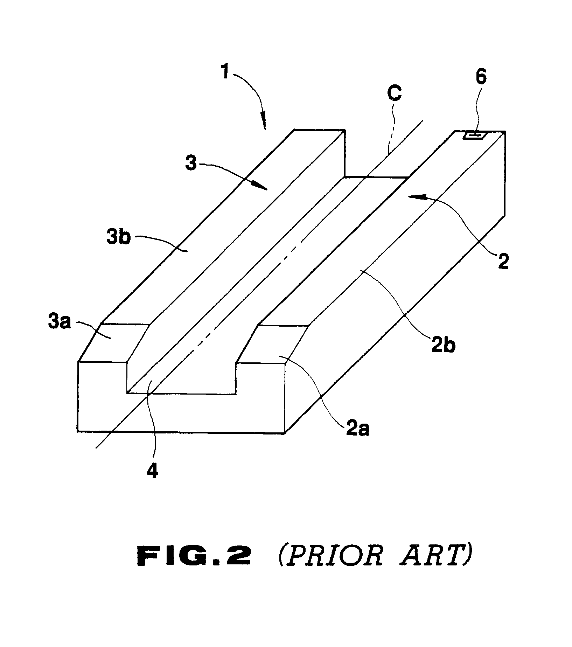

Fig. 2 shows a three dimensional front bottom view of the flying head slider 1. The flying head slider 1 is formed on its surface facing the magnetic disk 5 with a pair of side rails 2 and 3. The side rails 2 and 3 are arranged symmetrically with respect to the center line C to define a center recessed section 4 therebetween. The side rails 2 and 3 each have tapered height sections 2a and 3a at a leading end of the flying head slider 1, followed by level constant sections 2b and 3b each extending to a trailing end of the flying head slider 1. The tapered sections 2a and 3a are coplannar with each other and the level constant sections 2b and 3b are also coplannar with each other. Further, a width of each of the side rails 2 and 3 is constant across its length from the leading end to the trailing end. A magnetic transducer 6 is firmly fitted into a trailing end of the side rail 2 which is positioned inner of the side rail 3 with respect to a rotation axis of the magnetic disk 5. The magnetic transducer 6 may be provided at the side rail 3.

With the structure as described above, when the magnetic disk 5 is stopped, the level constant sections 2b and 3b of the side rails 2 and 3 are in contact with a surface of the magnetic disk 5. On the other hand, when the magnetic disk 5 starts to rotate, air flows are generated at portions neighboring the surface of the magnetic disk 5, moving with the rotating magnetic disk 5 and applying to the tapered sections 2a and 3a of the flying head slider 1. When an air flow velocity exceeds a predetermined value, the air flows applied to the tapered sections 2a and 3a flow into between the level constant sections 2b and 3b and the disk surface so as to produce positive pressures therebetween. The air flows are pressurized when passing through the tapered sections 2a and 3a. The positive pressures between the level constant sections 2b and 3b and the disk surface cause the flying head slider 1 to fly, that is, to move away from the disk surface against the spring force of the support arm 10. Since the flying head slider 1 is pivotable universally relative to the support arm 10, the flying head slider 1 takes a flying posture depending on positive pressure distributions between the level constant sections 2b and 3b and the disk surface.

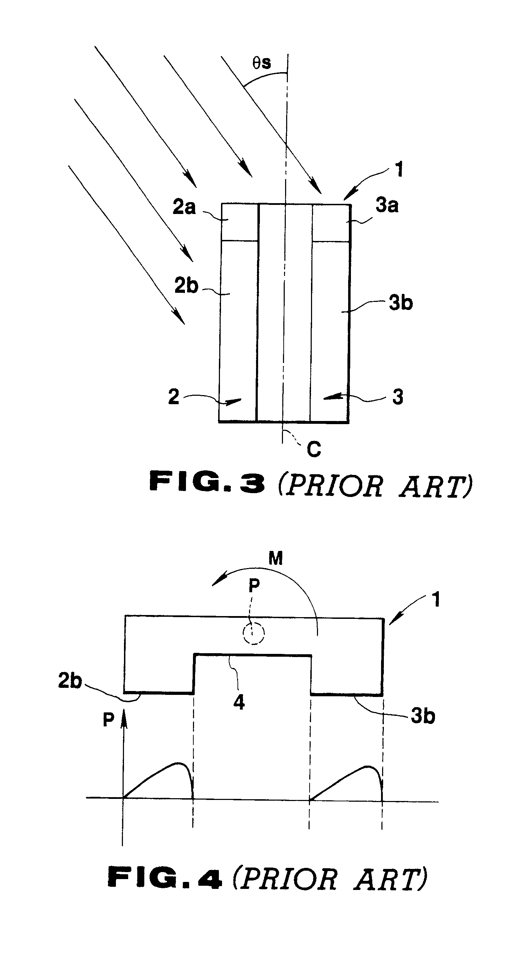

As described above, when the flying head slider 1 is positioned for the innermost track Ti, the center line C coincides with the tangential line of the innermost track Ti, that is, with a rotational direction of the magnetic disk 5. Accordingly, the positive pressure distributions under the level constant sections 2b and 3b are symmetrical with each other so that no rolling motion of the flying head slider 1 is caused with respect to the center line C. On the other hand, when the flying head slider 1 moves radially outward from the innermost track Ti, the rotational direction of the magnetic disk 5 or the corresponding air flow direction makes a skew angle $\theta s$ with respect to the center line C as shown in Fig. 3. In this condition, an inner side, adjacent to the center recessed section 4, of the level constant section 2b positioned upstream of the level constant section 3b works as an air flow outlet side, and an outer side, remote from the center recessed section 4, of the level constant section 3b works as an air flow outlet side. As shown in Fig. 4, a positive pressure between the level constant sections 2b and 3b and the disk surface becomes maximum in the vicinity of the air flow outlet side. Accordingly, a rolling moment with respect to a fulcrum P about which the flying head slider 1 is pivotable, generated by the positive pressure under the level constant section 3b becomes larger than that generated by the positive pressure under the level constant section 2b. This is because the maximum positive pressure under the level constant section 3b is located far from the fulcrum P in comparison with the maximum positive pressure under the level constant section 2b. As a result, a resultant rolling moment M is exerted on the flying head slider 1 as indicated by an arrow in Fig. 4 to roll same, that is, the side rail 2 gets closer to the disk surface than the side rail 3.

As appreciated, the skew angle $\theta s$ becomes largest at a position where the flying head slider 1 is located for the outermost track To, to make maximum a magnitude of the rolling or inclination of the flying head slider 1. Accordingly, a problem is raised that the level constant section 2b approaches too close to the disk surface to contact the latter or to deteriorate electromagnetic conversion characteristic of the magnetic transducer 6 due to the inclination of the flying head slider 1.

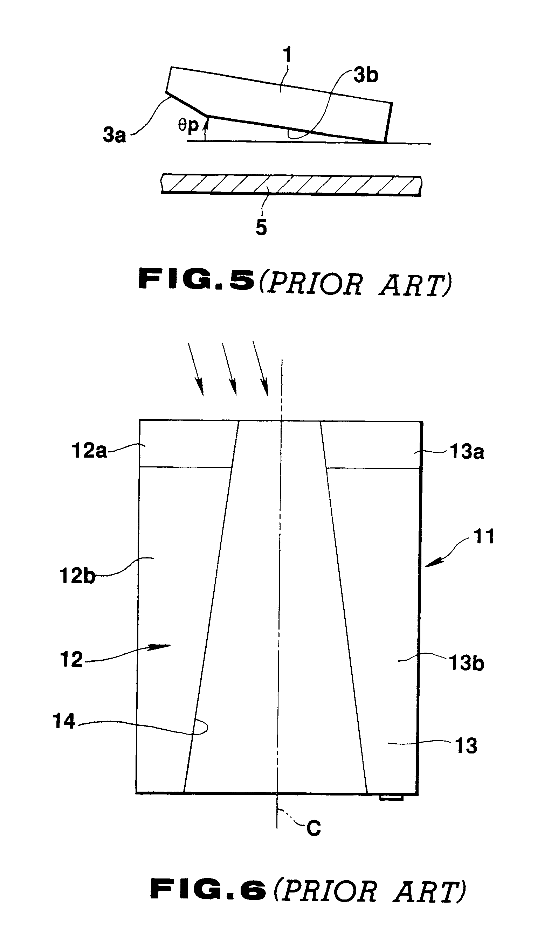

As shown in Fig. 5, the flying head slider 1 illustrated in Figs. 2 to 4 makes a flying posture with a small pitch angle $\theta p$, that is, the flying head slider 1 inclines closer to the disk surface at its trailing end. The small pitch angle $\theta p$ causes an unstable flying of the head slider 1 to deteriorate the dynamic characteristic of the flying head slider 1.

Fig. 6 shows another background art as disclosed in U.S. Patent No. 4,734,803, which improves the above-noted pitch angle problem. Specifically, a flying head slider 11 has a pair of side rails 12 and 13 each of which has a larger width toward a leading end of the flying head slider 11 from its trailing end. The larger width of each side rail is formed by widening each side rail toward the center line C. Accordingly, a center recessed section 14 defined by the side rails 12 and 13 is widened larger toward the trailing end of the flying head slider 11. Since dimensions of each of level constant sections 12b and 13b facing the disk surface are set larger at an upstream side than at a downstream side, a larger buoyancy is attained at the upstream side to provide a flying posture of the head slider 11 with a larger pitch angle $\theta p$.

The background art of Fig. 6, however, has the following drawbacks:

When the rotational direction of the magnetic disk 5 makes the skew angle $\theta s$ relative to the center line C, as described before, a rolling moment caused by the positive pressure under the level constant section 13b becomes larger than that caused by the positive pressure under the level constant section 12b. In addition, since an inner side, adjacent to the center recessed section 14, of the level constant section 13b extends along the air flow direction as clearly seen from Fig. 6, a larger amount of the air flows pressurized through a tapered section 13a works to generate the positive pressure under the level constant section 13b than under the level constant section 12b. As a result, the resultant rolling moment M indicated by the arrow in Fig. 3 becomes larger than that for the flying head slider 1 of Fig. 2 to cause a larger rolling of the flying head slider 11 so that the contact between the level constant section 12b and the disk surface becomes more likely.

## SUMMARY OF THE INVENTION

Therefore, it is an object of the present invention to provide a flying head slider that can eliminate the above-noted defects inherent in the background art.

It is another object of the present invention to provide a flying head slider that can prevent a rolling motion thereof to provide a stable flying characteristic thereof even when an air flow direction makes a skew angle relative to a center line of the flying head slider.

It is a further object of the present invention to provide a flying head slider that can prevent a rolling motion thereof with a large pitch angle so as to ensure a stable flying characteristic of the flying head slider, even when an air flow direction makes a skew angle relative to a center line of the flying head slider.

To accomplish the above-mentioned and other objects, according to one aspect of the present invention, a flying head slider for supporting a transducer comprises a slider structure having leading and trailing ends and an air bearing surface. A pair of side rails are disposed along the sides of the air bearing surface of the slider structure. The side rails are substantially coplannar and extend from the leading end of the slider structure to the trailing end of the slider structure. Each of the side rails includes a tapered section at the leading end. A recessed section is provided which occupies the space on the air bearing surface between the side rails. The recessed section is open at both the leading end and the trailing end of the slider structure for air flow. Further, the recessed section has a width, as measured normal to the leading to trailing dimension of the slider, that decreases or remains from a first value at the leading end to a second value at the trailing end. The first value is set greater than the second value.

According to another aspect of the present invention, a flying head slider for supporting a transducer comprises a slider structure having leading and trailing ends and an air bearing surface. The slider structure has a width, as measured normal to the leading to trailing dimension of the slider, that decreases or remains from a first value at the leading end to a second value at the trailing end. The first value is set greater than the second value. A pair of side rails are disposed along the sides of the air bearing surface of the slider structure. The side rails are substantially coplannar and extend from the leading end of the slider structure to the trailing end of the slider structure. Each of the side rails includes a tapered section at the leading end. A recessed section is provided which occupies the space on the air bearing surface between the side rails. The recessed section is open at both the leading end and the trailing end of the slider structure, for air flow.

According to still another aspect of the present invention, a flying head slider for supporting a transducer, the flying head slider having leading and trailing ends and a center line extending between the leading and trailing ends, comprises first and second side rails extending respectively between the leading and trailing ends at opposite sides with respect to the center line. Each of the first and second side rails includes a tapered section at the leading end for receiving an air flow to introduce same under a portion of the corresponding side rail. This portion follows the tapered section toward the trailing end. The first and second side rails define therebetween a recessed section which is open at both the leading and trailing ends. Further, the first and second side rails have shapes such that, when a direction of the air flow makes a skew angle relative to the center line, the first side rail provides a first path for the air flow introduced under the portion of the first side rail through the tapered section of the first side rail and the second side rail provides a second path for the air flow introduced under the portion of the second side rail through the tapered section of the second side rail. The first path extends under the portion of the first side rail from the tapered section of the first side rail at its upstream end to the recessed section at its downstream end. On the other hand, the second path extends under the portion of the second side rail from the tapered section of the second side rail at its upstream end to outside of the flying head slider at ifs downstream end. The first path is set longer than the second path.

## BRIEF DESCRIPTION OF THE DRAWINGS

The present invention will be understood more fully from the detailed description given hereinbelow and from the accompanying drawings of the preferred embodiments of the invention, which are given by way of example only, and are not intended to be limitative of the present invention.

In the drawings:

Fig. 1 is a schematic plan view showing a rotary type actuator of a flying head slider along with a magnetic disk, according to a background art;

Fig. 2 is a three dimensional front bottom view showing a flying head slider of the background art;

Fig. 3 is a bottom plan view showing the flying head slider of Fig. 2 along with an air flow direction;

Fig. 4 is a view showing a relationship between the flying head slider and a positive pressure distribution under the flying head slider;

Fig. 5 is a side elevational view showing the flying head slider flying with a small pitch angle relative to a moving disk surface;

Fig. 6 is a bottom plan view showing another flying head slider of the background art;

Fig. 7 is a three dimensional front bottom view showing a flying head slider according to a first preferred embodiment of the present invention;

Fig. 8 is a bottom plan view showing the flying head slider of Fig. 7 along with an air flow direction;

Fig. 9 is a graph showing a relationship between rail width ratio and rolling angle of the flying head slider according to the first preferred embodiment;

Fig. 10 is a three dimensional front bottom view showing a flying head slider according to a second preferred embodiment of the present invention;

Fig. 11 is a bottom plan view showing the flying head slider of Fig. 10 along with an air flow direction;

Fig. 12 is a graph contrastively showing a relationship between rail width ratio and rolling angle of the flying head slider, according to the background art and the second preferred embodiment;

Fig. 13 is a graph showing a relationship between rail width ratio and rolling angle of the flying head slider according to the second preferred embodiment;

Fig. 14 is a graph showing a relationship between rail width ratio and pitch angle of the flying head slider according to the second preferred embodiment; and

Figs. 15A to 15H respectively show modifications of the flying head slider.

## DESCRIPTION OF THE PREFERRED EMBODIMENT

Now, referring to the drawings, preferred embodiments of a flying head slider according to the present invention will be described hereinbelow.

Since the preferred embodiments differ from the background art only in structure of a flying head slider, i.e. the foregoing hard disk drive unit of the background art can be used in the preferred embodiments except for the flying head slider, a detailed explanation will be made hereinbelow only for the flying head slider itself.

Referring to Fig. 1, the flying head slider according to the preferred embodiments of the present invention is mounted on a tip end of the support arm 10 so as to be pivotable universally relative to the support arm 10, as in the background art.

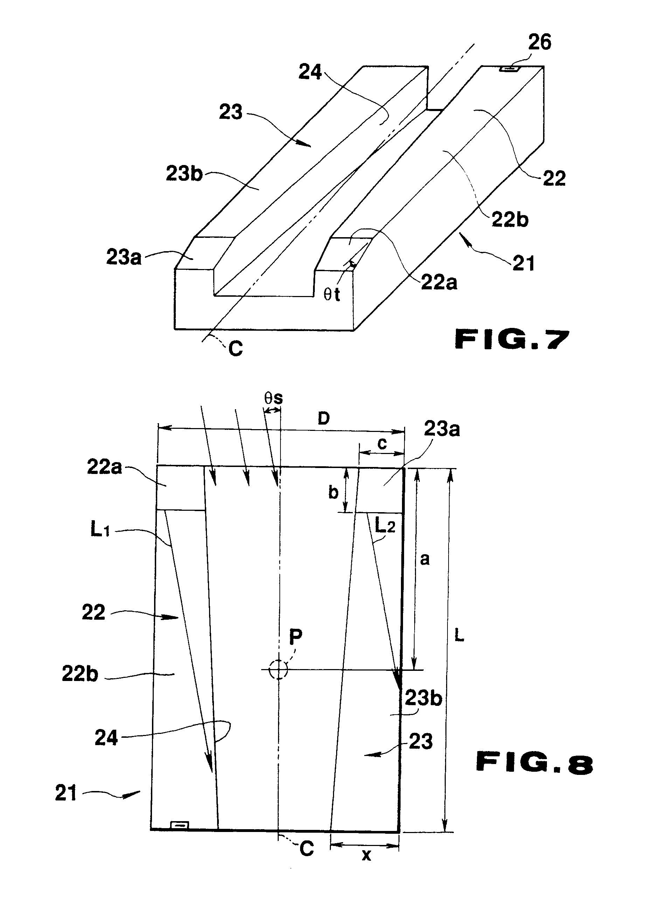

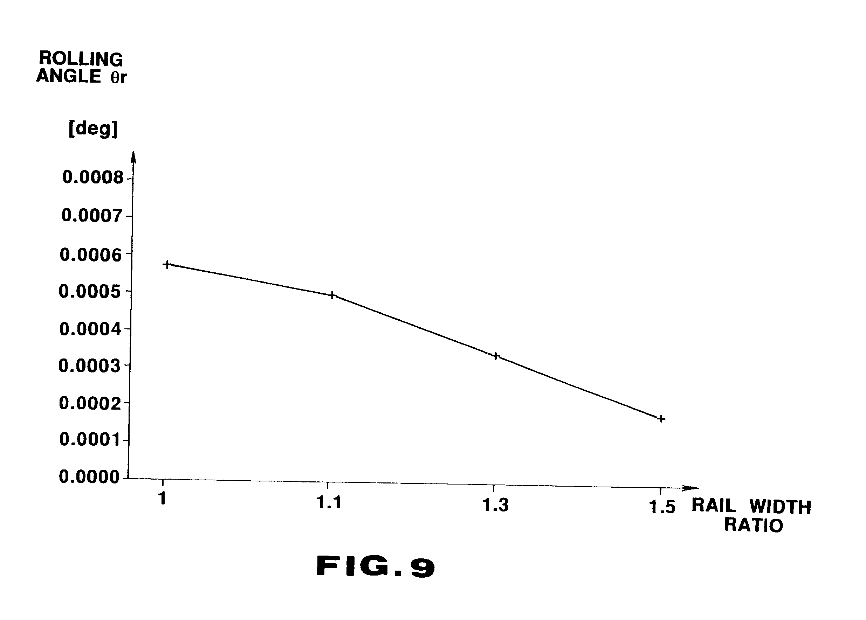

Figs. 7 and 8 show the flying head slider according to the first preferred embodiment. The flying head slider 21 is formed on its surface facing the magnetic disk 5 shown in Fig. 1 with a pair of side rails 22 and 23. The side rails 22 and 23 are arranged symmetrically with respect to the center line C to define a center recessed section 24 therebetween. The side rails 22 and 23 each have tapered height sections 22a and 23a at a leading end (air inlet side) of the flying head slider 21, followed by level constant sections 22b and 23b each extending to a trailing end of the flying head slider 21. Each of the tapered sections 22a and 23a has a surface which inclines closer to the disk surface as it goes far from the leading end of the flying head slider 2l. Each tapered section receives an air flow generated due to the rotation of the magnetic disk 5 to pressurize and introduce same into between the corresponding level constant section and the disk surface. The tapered sections 22a and 23a are coplannar with each other and the level constant sections 22b and 23b are also coplannar with each other and extend substantially in parallel to the disk surface. A magnetic transducer 26 is firmly fitted into a trailing end of the side rail 22 which is positioned inner of the side rail 23 with respect to the rotation axis of the magnetic disk 5. The magnetic transducer 26 may be provided at the side rail 23. Each of the side rails 22 and 23 has a larger width toward the trailing end of the flying head slider 21 from its leading end. Sepcifically, the larger width of each side rail is formed by widening each side rail toward the center line C. Accordingly, the center recessed section 24 has a larger width toward the leading end of the flying head slider 21 from its trailing end.

Now, the operation of the first preferred embodiment will be described hereinbelow.

When the magnetic disk 5 is stopped, the level constant sections 22b and 23b of the side rails 22 and 23 are in contact with the disk surface, biased by a small spring force from the support arm 10 shown in Fig. 1. On the other hand, when the magnetic disk 5 starts to rotate, air flows are generated at portions neighboring the disk surface. The air flows move with the rotating magnetic disk 5 and hit the tapered sections 22a and 23a. When an air flow velocity exceeds a predetermined value with an increasing rotational speed of the magnetic disk 5, the air flows applied to the tapered sections 22a and 23a flow into between the level constant sections 22b and 23b and the disk surface so as to produce positive pressures therebetween. The air flows are pressurized when passing through the tapered sections 22a and 23a. The positive pressures between the level constant sections 22b and 23b and the disk surface cause the flying head slider 21 to fly, that is, to move away from the disk surface against the spring force of the support arm 10. Since the flying head slider 21 is pivotable universally relative to the support arm 10. the flying head slider 21 takes a flying posture depending on the positive pressure distribution between the level constant sections 22b and 23b and the disk surface.

When the flying head slider 21 is positioned for the innermost track Ti. the center line C of the flying head slider 21 coincides with the tangential line of the innermost track Ti. that is, with a rotational direction of the magnetic disk 5. Accordingly, the positive pressure distribution under the level constant sections 22b and 23b are symmetrical with each other relative to the center line C so that no rolling motion of the flying head slider 21 is caused with respect to the center line C to maintain the horizontal posture of the flying head slider 21.

On the other hand, when the flying head slider 21 moves radially outward from the innermost track Ti, the rotational direction of the magnetic disk 5 or the corresponding air flow direction makes a skew angle $\theta$s relative to the center line C as shown in Fig. 8. In this condition, an inner side, adjacent to the center recessed section 24, of the level constant section 22b positioned upstream of the level constant section 23b works as an air flow outlet side, and an outer side, remote from the center recessed section 24, of the level constant section 23b works as an air flow outlet side. Specifically, the pressurized air introduced under the level constant section 22b through the tapered section 22a flows out through the inner side of the level constant section 22b toward the center recessed section 24, while, the pressurized air introduced under the level constant section 23b through the tapered section 23a flows out through the outer side of the level constant section 23b to outside of the flying head slider 21.

As described in the background art and as shown in Fig. 4, the positive pressure between the level constant sections 22b and 23b and the disk surface becomes maximum in the vicinity of the air flow outlet side. Accordingly, with the flying head slider as shown in Figs. 2 and 6, the resultant rolling moment M is exerted onto the flying head slider as shown in Fig. 4 to roll or incline the latter.

In the first preferred embodiment, as described above, each of the side rails 22 and 23 has a larger width toward the trailing end of the flying head slider 21 from its leading end, and this larger width is formed by widening each side rail toward the center line C. Accordingly, the inner side of the level constant section 22b extends more along the air flow direction in comparison with the outer side of the level constant section 23b. As a result, the pressurized air introduced under the level constant section 22b through the tapered section 22a flows, for example, a longer distance L1 under the level constant section 22b than that introduced under the level constant section 23b through the tapered section 23a which flows, for example, a shorter distance L2 under the level constant section 23b, as shown in Fig. 8.

Since air pressure increases as the pressurized air flows a longer distance between the level constant sections 22b and 23b and the disk surface, the total positive pressure applied to the level constant section 22b becomes larger than that applied to the level constant section 23b. As a result, a rolling moment in a direction to cancel the above-noted rolling moment M is exerted onto the flying head slider 21 to prevent the rolling of the latter to maintain the horizontal posture thereof.

Fig. 9 shows a relationship between rail width ratio and rolling angle of the flying head slider. Specifically, the relationship shown in Fig. 9 has been derived by setting L = 4100micrometer, D = 3170micrometer, a = 2200micrometer, b = 400micrometer, c = 620micrometer, $\theta t$ = 0.85degree, v = 17m/s, $\theta s$ = 20degree and Load = 9.5g, and by changing a value of x to provide various rail width ratios (x/c), wherein L is a length of the flying head slider along the center line C, D is a width of the flying head slider, a is a length between the leading end of the flying head slider and the fulcrum P, b is a length of the tapered section 22a or 23a, c is a width of the side rail 22 or 23 at its leading end, $\theta t$ is a tapered angle of the tapered section 22a or 23a, v is a speed of the rotating magnetic disk 5, $\theta s$ is a skew angle between the air flow direction and the center line C, and x is a width of the side rail 22 or 23 at its trailing end. As appreciated from Fig. 9, the rolling angle becomes less with the increasing rail width ratio (x/c).

It is to be appreciated that only the side rail 22 may have the shape as shown in Figs. 7 and 8, that is, the side rail 23 may have a constant width along the center line C. In this condition, when the flying head slider 21 is positioned for the innermost track Ti where the air flow direction coincides with the center line C, there more or less arises a rolling or inclination of the flying head slider due to differential in positive pressure distribution under the level constant sections 22b and 23b. It is to be noted, however, that since the same amount of the pressurized air is introduced under the level constant sections 22b and 23b through the tapered sections 22a and 23a, the resulted rolling angle is quite small.

Now, the second preferred embodiment will be described hereinbelow.

Though the first preferred embodiment effectively prevents the rolling or inclination of the flying head slider, the pitch angle of the flying head slider may become less than the background art of Fig. 2. Specifically, in the first preferred embodiment, since each of the side rails 22 and 23 has a less width at its leading end in comparison with a width at its trailing end, it may be possible that the positive pressure which is large enough to fly the leading side of the flying head slider with a sufficiently large pitch angle, is not generated.

The second preferred embodiment improves the above-noted pitch angle problem with the effective prevention of the generation of the rolling of the flying head slider.

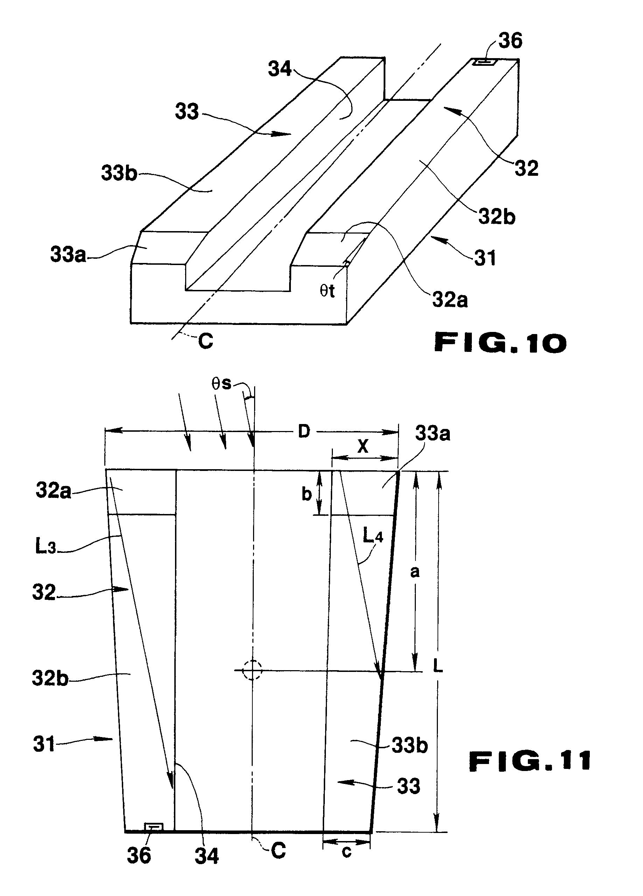

Figs. 10 and 11 show the flying head slider according to the second preferred embodiment. The flying head slider 31 is formed on its surface facing the magnetic disk 5 shown in Fig. 1 with a pair of side rails 32 and 33. The side rails 32 and 33 are arranged symmetrically with respect to the center line C to define a center recessed section 34 therebetween. The side rails 32 and 33 each have tapered height sections 32a and 33a at a leading end (air inlet side) of the flying head slider 31, followed by level constant sections 32b and 33b each extending to a trailing end of the flying head slider 31. Each of the tapered sections 32a and 33a has a surface which inclines closer to the disk surface as it goes far from the leading end of the flying head slider 31. Each tapered section receives an air flow generated due to the rotation of the magnetic disk 5 to pressurize and introduce same into between the corresponding level constant section and the disk surface. The tapered sections 32a and 33a are coplannar with each other and the level constant sections 32b and 33b are also coplannar with each other and extend substantially in parallel to the disk surface. A magnetic transducer 36 is firmly fitted into a trailing end of the side rail 32 which is positioned inner of the side rail 33 with respect to the rotation axis of the magnetic disk 5. The magnetic transducer 36 may be provided at the side rail 33. Each of the side rails 32 and 33 has a larger width toward the leading end of the flying head slider 31 from its trailing end. Sepcifically, the larger width of each side rail is formed by widening each side rail outward with respect to the center line C. Accordingly, the flying head slider 31 has a trapezoid configuration in plan view and each of the inner sides, defining the center recessed section 34, of the side rails 32 and 33 extends in parallel to the center line C.

Now, the operation of the second preferred embodiment will be described hereinbelow.

When the magnetic disk 5 is stopped, the level constant sections 32b and 33b of the side rails 32 and 33 are in contact with the disk surface, biased by a small spring force from the support arm 10 shown in Fig. 1. On the other hand, when the magnetic disk 5 starts to rotate, air flows are generated at portions neighboring the disk surface. The air flows move with the rotating magnetic disk 5 and hit the tapered sections 32a and 33a. When an air flow velocity exceeds a predetermined value with an increasing rotational speed of the magnetic disk 5, the air flows applied to the tapered sections 32a and 33a flow into between the level constant sections 32b and 33b and the disk surface so as to produce positive pressures therebetween. The air flows are pressurized when passing through the tapered sections 32a and 33a. The positive pressures between the level constant sections 32b and 33b and the disk surface cause the flying head slider 31 to fly, that is, to move away from the disk surface against the spring force of the support arm 10. Since th flying head slider 31 is pivotable universally relative to the support arm 10, the flying head slider 31 takes a flying posture depending on the positive pressure distribution between the level constant sections 32b and 33b and the disk surface.

In the second preferred embodiment, the flying head slider 31 takes the flying posture with a larger pitch angle $\theta p$ than in the first preferred embodiment since the width of each side rail is set larger toward the leading end of the flying head slider 31 to provide a larger buoyancy at the leading side than at the trailing side.

When the flying head slider 31 is positioned for the innermost track Ti, the center line C of the flying head slider 31 coincides with the tangential line of the innermost track Ti, that is, with a rotational direction of the magnetic disk 5. Accordingly, the positive pressure distribution under the level constant sections 32b and 33b are symmetrical with each other relative to the center line C so that no rolling motion of the flying head slider 31 is caused with respect to the center line C to maintain the horizontal posture of the flying head slider 31.

On the other hand, when the flying head slider 31 moves radially outward from the innermost track Ti, the rotational direction of the magnetic disk 5 or the corresponding air flow direction makes a skew angle $\theta s$ relative to the center line C as shown in Fig. 11. In this condition, an inner side, adjacent to the center recessed section 34, of the level constant section 32b positioned upstream of the level constant section 33b works as an air flow outlet side, and an outer side, remote from the center recessed section 34, of the level constant section 33b works as an air flow outlet side. Specifically, the pressurized air introduced under the level constant section 32b through the tapered section 32a flows out through the inner side of the level constant section 32b toward the center recessed section 34, while, the pressurized air introduced under the level constant section 33b through the tapered section 33a flows out through the outer side of the level constant section 33b to outside of the flying head slider 31.

As described in the background art and as shown in Fig. 4, the positive pressure between the level constant sections 32b and 33b and the disk surface becomes maximum in the vicinity of the air flow outlet side. Accordingly, with the flying head slider as shown in Figs. 2 and 6, the resultant rolling moment M is exerted onto the flying head slider as shown in Fig. 4 to roll or incline the latter.

In the second preferred embodiment, as described above, each of the side rails 32 and 33 has a larger width toward the leading end of the flying head slider 31 from its leading end, and this larger width is formed by widening each side rail outward with respect to the center line C. Accordingly, the outer side of the level constant section 32b extends in a direction to make less a skew angle between the air flow direction and the outer side of the level constant section 32b, while, the outer side of the level constant section 33b extends in a direction to make larger a skew angle between the air flow direction and the outer side of the level constant section 33b. As a result, the pressurized air introduced under the level constant section 32b through the tapered section 32a flows, for example, a longer distance L3 under the level constant section 32b than that introduced under the level constant section 33b through the tapered section 33a which flows, for example, a shorter distance L4 under the level constant section 33b, as shown in Fig. 11.

Since air pressure increases as the pressurized air flows a longer distance between the level constant sections 32b and 33b and the disk surface, the total positive pressure applied to the level constant section 32b becomes larger than that applied to the level constant section 33b. As a result, a rolling moment in a direction to cancel the above-noted rolling moment M is exerted onto the flying head slider 31 to prevent the rolling of the latter to maintain the horizontal posture thereof.

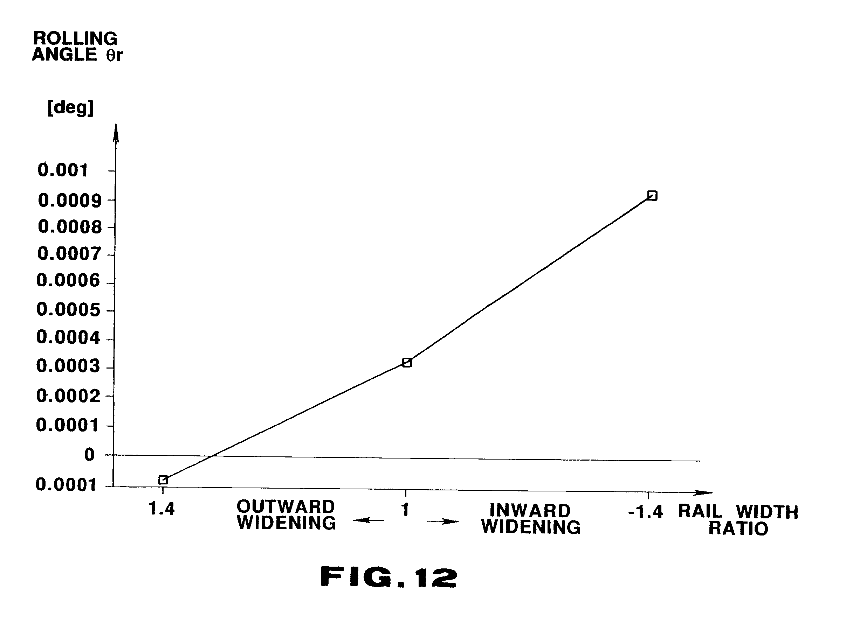

Fig. 12 shows a relationship between rail width ratio and rolling angle of the flying head slider. Specifically, the relationship shown in Fig. 12 has been derived by setting L = 2540micrometer, D = 2032micrometer, a = 1320.8micrometer, b = 254micrometer, c = 300micrometer, $\theta t$ = 0.85degree, v = 17m/s, $\theta s$ = 20degree and Load = 9.5g, and by changing a value of x to provide various rail width ratios (x/c), wherein L is a length of the flying head slider along the center line C, D is a width of the flying head slider, a is a length between the leading end of the flying head slider and the fulcrum P, b is a length of the tapered section, c is a width of the side rail at its trailing end, $\theta t$ is a tapered angle of the tapered section, v is a speed of the rotating magnetic disk 5, $\theta s$ is a skew angle between the air flow direction and the center line C, and x is a width of the side rail at its leading end. Fig. 12 contrastively shows two cases, in one of which the width x is changed outward with respect to the center line C according to the second preferred embodiment and in the other of which the width x is changed inward with respect to the center line C according to the background art of Fig. 6. As appreciated from Fig. 12, the rolling angle becomes less with the increasing rail width ratio (x/c) in the second preferred embodiment, while, the rolling angle becomes larger with the increasing rail width (x/c) in the background art of Fig. 6.

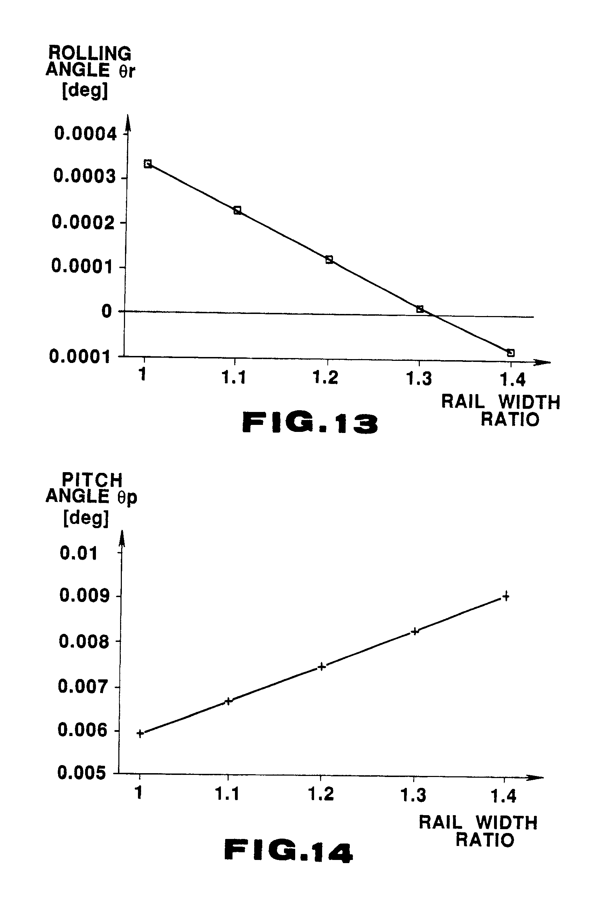

Fig. 13 shows the relationship between rail width ratio and rolling angle of the flying head slider according to the second preferred embodiment, under the same dimensional condition as in Fig. 12. As appreciated from Fig. 13, the rail width ratio (x/c) of about 1.3 is most preferable where the rolling of the flying head slider is minimum.

Fig. 14 shows a relationship between rail width ratio and pitch angle of the flying head slider according to the second preferred embodiment, under the same dimensional condition as in Fig. 12. As appreciated from Fig. 14, the pitch angle $\theta p$ of the flying head slider becomes larger with the increasing rail width ratio (x/c). For example, when the rail width raio (x/c) is set to 1.3 where the rolling angle $\theta r$ is about zero, the pitch angle $\theta p$ of about 0.0083 is attained.

It is to be appreciated that only the side rail 32 may have the shape as shown in Figs. 10 and 11, that is, the side rail 33 may have a constant width along the center line C. In this condition, when the flying head slider 31 is positioned for the innermost track Ti where the air flow direction coincides with the center line C, there more or less arises a rolling or inclination of the flying head slider due to differential in positive pressure distribution under the level constant sections 32b and 33b. It is to be noted, however, that since the same amount of the pressurized air is introduced under the level constant sections 32b and 33b through the tapered sections 32a and 33a, the resulted rolling angle is quite small.

In the second preferred embodiment, as appreciated from the foregoing description, the flying posture of the flying head slider with a less rolling angle and a larger pitch angle is ensured to effectively prevent the contact between the magnetic disk and the flying head slider as well as to provide an improved electromagnetic conversion characteristic. Further, when the flying head slider is applied to the hard disk drive unit where the flying head slider is in contact with the disk surface when the magnetic disk is stopped and flies when receiving the air flows caused by the rotation of the magnetic disk as in the foregoing preferred embodiments, the flying head slider can fly at a lower speed of the magnetic disk in comparison with the background art of Fig. 2.

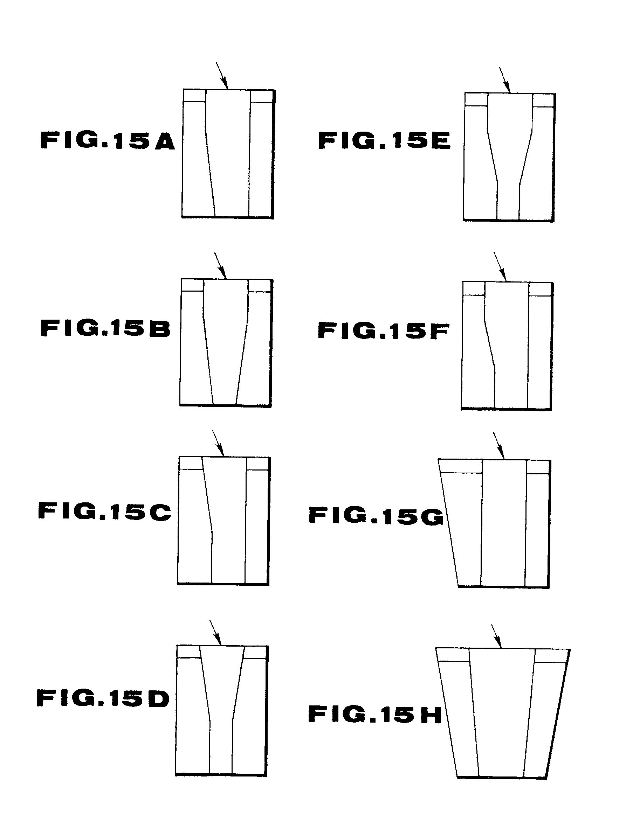

It is to be understood that the invention is not to be limited to the embodiments described above, and that various changes and modifications may be made without departing from the spirit and scope of the invention as defined in the appended claims. For example, the present invention includes various modifications of the flying head slider, such as, shown in Figs. 15A to 15H. Though explanation for these modifications are omitted herein, it is easily appreciated that these modifications can also provide equivalent effects as in the first or second preferred embodiment.

## Claims

1. A flying head slider for supporting a transducer, comprising:

    a slider structure (21) having leading and trailing ends and an air bearing surface;

    a pair of side rails (22, 23) disposed along the sides of said air bearing surface of said slider structure (21), said rails (22, 23) being substantially coplanar and extending from the leading end of said slider structure to the trailing end of said slider structure, each of said rails (22, 23) having a tapered section (22a, 23a) at the leading end;

    a recessed section (24) of said slider structure (21), said recessed section (24) occupying the space on said air bearing surface between said side rails (22, 23), said recessed section being open at both the leading end and the trailing end of said slider structure (21) for air flow, said recessed section having a width, as measured normal to the leading to trailing dimension of said slider, that decreases or remains from a first value at the leading end to a second value at the trailing end, said first value being greater than said second value.

2. A flying head slider according to claim 1, wherein at least one of said side rails (22, 23) has a width, as measured normal to the leading to trailing dimension of said slider, that increases or remains from a third value (c) at the leading end to a fourth value (x) at the trailing end, said fourth value being greater than said third value.

3. A flying head slider according to claim 1, wherein each of said side rails has a width, as measured normal to the leading to trailing dimension of said slider, that increases or remains from a third value at the leading end to a fourth value at the trailing end, said fourth value being greater than said third value.

4. A flying head slider according to claim 2, wherein said flying head slider (21) has a rectangular shape.

5. A flying head slider for supporting a transducer, comprising:

a slider structure (31) having leading and trailing ends and an air bearing surface, said slider structure (31) having a width, as measured normal to the leading to trailing dimension of said slider, that decreases or remains from a first value (D) at the leading end to a second value at the trailing end, said first value being greater than said second value;

a pair of side rails (32, 33) disposed along the sides of said air bearing surface of said slider structure (31), said rails (32, 33) being substantially coplanar and extending from the leading end of said slider structure (31) to the trailing end of said slider structure, each of said rails having a tapered section (32a, 33a) at the leading end;

a recessed section (34) of said slider structure (31), said recessed section (34) occupying the space on said air bearing surface between said side rails (32, 33), said recessed section (34) being open at both the leading end and the trailing end of said slider structure (31), for air flow.

6. A flying head slider according to claim 5, wherein said recessed section has a constant width, as measured normal to the leading to trailing dimension of said slider, at least one of said side rails (32, 33) having a width, as measured normal to the leading to trailing dimension of said slider, that decreases or remains from a third value (x) at the leading end to a fourth value (c) at the trailing end, said third value being greater than said fourth value.

7. A flying head slider according to claim 6, wherein said flying head slider (31) has a symmetrical shape and both of said side rails (32, 33) have a width, as measured normal to the leading to trailing dimension of said slider, that decreases or remains from a third value at the leading end to a fourth value at the trailing end, said third value being greater than said fourth value.

8. A flying head slider for supporting a transducer, said flying head slider having leading and trailing ends and a center line (C) extending between said leading and trailing ends, said flying head slider comprising:

first and second side rails (22, 23), respectively, extending between said leading and trailing ends at opposite sides with respect to said center line (C);

each of said first and second side rails (22, 23) having a tapered section (22a, 23a) at said leading end for receiving an air flow to introduce same under a portion of the corresponding side rail, said portion following said tapered section toward said trailing end;

said first and second side rails defining therebetween a recessed section (24) which is open at both said leading and trailing ends;

said first and second side rails (22, 23) having shapes such that, when a direction of said air flow makes a skew angle $\theta$s relative to said center line (C), said first side rail (22) provides a first path (L1) for the air flow introduced under said portion of the first side rail (22) through the tapered section (22a) of the first side rail (22) and said second side rail (23) provides a second path (L2) for the air flow introduced under said portion of the second side rail (23) through the tapered section (23a) of the second side rail (23), said first path (L1) extending under said portion of the first side rail (22) from the tapered section (22a) of the first side rail (22) at its upstream end to said recessed section (24) at its downstream end, said second path (L2) extending under said portion of the second side rail (23) from the tapered section (23a) of the second side rail (23) at its upstream end to outside of the flying head slider (21) at its downstream end, said first path (L1) being longer than said second path (L2)

**FIG.1** *(PRIOR ART)*

**FIG.2** *(PRIOR ART)*

**FIG. 3** *(PRIOR ART)*

**FIG. 4** *(PRIOR ART)*

**FIG.5** *(PRIOR ART)*

**FIG.6** *(PRIOR ART)*

EP 0 432 733 A2

**FIG.7**

**FIG.8**

FIG.9

EP 0 432 733 A2

**FIG.10**

**FIG.11**

**ROLLING
ANGLE θr**

**[deg]**

**FIG.12**

**FIG.13**

**FIG.14**

FIG.15A

FIG.15E

FIG.15B

FIG.15F

FIG.15C

FIG.15G

FIG.15D

FIG.15H